(19) Europäisches Patentamt / European Patent Office / Office européen des brevets

(11) **EP 4 667 433 A1**

(12) **EUROPEAN PATENT APPLICATION**
published in accordance with Art. 153(4) EPC

(43) Date of publication:
**24.12.2025 Bulletin 2025/52**

(21) Application number: **24756989.0**

(22) Date of filing: **16.02.2024**

(51) International Patent Classification (IPC):
**C03C 25/1065** (2018.01)     **C03C 25/24** (2018.01)
**G02B 6/44** (2006.01)

(52) Cooperative Patent Classification (CPC):
**C03C 25/1065; C03C 25/24; G02B 6/44**

(86) International application number:
**PCT/JP2024/005481**

(87) International publication number:
**WO 2024/172150 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 JP 2023022232**

(71) Applicant: **Sumitomo Electric Industries, Ltd.**
**Osaka-shi, Osaka 541-0041 (JP)**

(72) Inventors:
• **NOMURA, Takahiro**
  **Osaka-shi, Osaka 541-0041 (JP)**
• **SOHMA, Kazuyuki**
  **Osaka-shi, Osaka 541-0041 (JP)**
• **SHIOZAKI, Manabu**
  **Osaka-shi, Osaka 541-0041 (JP)**

(74) Representative: **TBK**
**Bavariaring 4-6**
**80336 München (DE)**

(54) **OPTICAL FIBER**

(57)   An optical fiber includes a glass fiber including a core and a cladding surrounding the core, a primary resin layer surrounding the glass fiber, and a secondary resin layer surrounding the primary resin layer. In the optical fiber, in a case where a radius of the glass fiber is denoted by R0 [m], a Young's modulus of the glass fiber is denoted by E0 [N/m$^2$], a radius of the primary resin layer is denoted by R1 [m], a Young's modulus of the primary resin layer is denoted by E1 [N/m$^2$], a radius of the secondary resin layer is denoted by R2 [m], and a Young's modulus of the secondary resin layer is denoted by E2 [N/m$^2$], a relationship between a lateral rigidity D [N/m$^2$] of the optical fiber represented by Formula (1) and a flexural rigidity H [N·m$^2$] of the optical fiber represented by Formula (2) satisfies Formula (3), and a coating concentricity error is 8 $\mu$m or less.

[Equation 1]

$$D = \left\{ \frac{c1}{\left(1 - \frac{R0}{R2}\right)^{c2}} + c3 \right\} \left\{ (E2 - E1)10^{\sum_{i,j,k} c_{ijk}\left(log_{10}\frac{R2-R1}{R2-R0}\right)^i \left(log_{10}\frac{E1}{E2}\right)^j \left(log_{10}\frac{R0}{R2}\right)^k} + E1 \right\} \dots (1)$$

$$H \propto \pi R0^4 E0 + \pi\left(R2^4 - R1^4\right)E2 \dots (2)$$

$$D/H^2 \ [\mathrm{N}^{-1} \cdot \mathrm{m}^{-6}] \leqq 6.6 \times 10^{18} \ [\mathrm{N}^{-1} \cdot \mathrm{m}^{-6}] \dots (3)$$

EP 4 667 433 A1

**(Cont. next page)**

*Fig.1*

## Description

### Technical Field

The present disclosure relates to an optical fiber. The present application claims priority to Japanese Patent Application No. 2023-022232 filed on February 16, 2023, and the entire contents of the Japanese patent application are incorporated herein by reference.

### Background Art

As communication traffic increases, economical optical network construction becomes important. From the viewpoint of reducing transportation, laying costs, and the like, an optical cable is expected to have a smaller diameter and a higher density in this case. Along with this, the diameter of an optical fiber itself is also required to be reduced. However, the reduction in diameter has caused a problem of an increase in a microbend loss in the cable formation. Therefore, it is required to perform a structural examination on the basis of an analysis formula capable of systematically estimating the influence on an optical fiber structure.

It is described in Non-Patent Literature 1 that microbending resistance characteristics of an optical fiber related to lateral rigidity D and flexural rigidity H of the optical fiber are calculated by an approximation formula. It is described in Patent Literature 1 that the approximation formula of Non-Patent Literature 1 is expanded to a form close to the actual form.

### Citation List

### Patent Literature

Patent Literature 1: International Publication WO 2018/025896

### Non Patent Literature

Non Patent Literature 1: F. Cocchini, "The Lateral Rigidity of Double-Coated Optical Fibers", JOURNAL OF LIGHTWAVE TECHNOLOGY, VOL. 13, NO. 8, AUGUST 1995

### Summary of Invention

An optical fiber of the present disclosure includes a glass fiber including a core and a cladding surrounding the core, a primary resin layer surrounding the glass fiber, and a secondary resin layer surrounding the primary resin layer, wherein in a case where a radius of the glass fiber is denoted by R0 [m], a Young's modulus of the glass fiber is denoted by E0 [N/m$^2$], a radius of the primary resin layer is denoted by R1 [m], a Young's modulus of the primary resin layer is denoted by E1 [N/m$^2$], a radius of the secondary resin layer is denoted by R2 [m], and a Young's modulus of the secondary resin layer is denoted by E2 [N/m$^2$], a relationship between a lateral rigidity D [N/m$^2$] of the optical fiber represented by Formula (1) and a flexural rigidity H [N·m$^2$] of the optical fiber represented by Formula (2) satisfies Formula (3), and a coating concentricity error is 8 $\mu$m or less,

[Equation 1]

$$D = \left\{ \frac{c1}{\left(1 - \frac{R0}{R2}\right)^{c2}} + c3 \right\} \left\{ (E2 - E1)10^{\sum_{i,j,k} c_{ijk}\left(log_{10}\frac{R2-R1}{R2-R0}\right)^{i}\left(log_{10}\frac{E1}{E2}\right)^{j}\left(log_{10}\frac{R0}{R2}\right)^{k}} + E1 \right\} \ldots (1)$$

$$H \propto \pi R0^4 E0 + \pi\left(R2^4 - R1^4\right)E2 \ldots (2)$$

$$D/H^2 \; [\text{N}^{-1} \cdot \text{m}^{-6}] \leqq 6.6 \times 10^{18} \; [\text{N}^{-1} \cdot \text{m}^{-6}] \ldots (3)$$

where, c1 = 0.209367, c2 = 1.206659, c3 = 0.401169, and $c_{ijk}$ is as follows

$c_{000}$ = -0.611554,
$c_{100}$ = 3.615414,
$c_{010}$ = 0.253128,
$c_{001}$ = -7.130445,

$c_{200} = 0.787599$,
$c_{110} = 0.329243$,
$c_{101} = 2.320080$,
$c_{020} = -0.062024$,
$c_{011} = -0.985974$, and
$c_{002} = -8.696048$.

**Brief Description of Drawings**

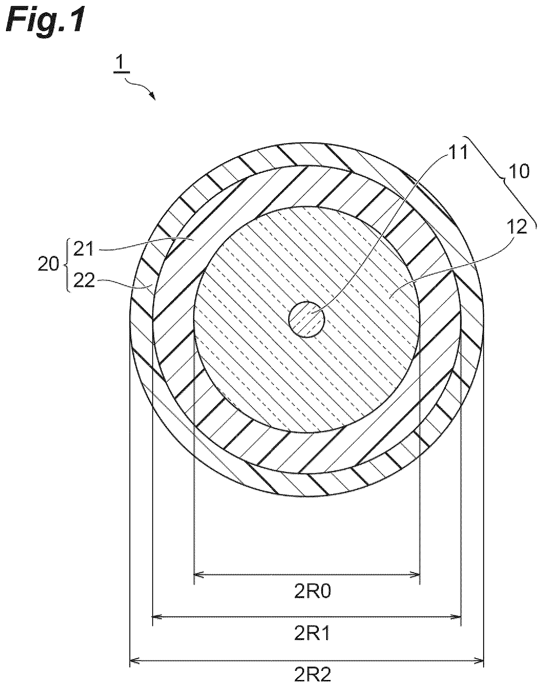

FIG. 1 is a cross-sectional view perpendicular to the fiber axis of an optical fiber according to an embodiment.

**Description of Embodiments**

[Problem to be Solved by Present Disclosure]

The approximation formula in Patent Literature 1 is calculated by numerical analysis in which the diameter (glass diameter) of the glass fiber is limited to 125 $\mu$m. Therefore, it has been found that in a case where optical fibers having different glass diameters are applied, the deviation between a calculated value and an actually measured value of a microbend loss may increase. That is, in the optical fiber described in Patent Literature 1, the microbend loss may not be reduced.

An object of the present disclosure is to provide an optical fiber capable of more reliably reducing a microbend loss.

[Effects of Present Disclosure]

According to the present disclosure, it is possible to provide an optical fiber capable of more reliably reducing a microbend loss.

[Description of Aspects of Present Disclosure]

Aspects of the present disclosure are first listed and described.

(1) An optical fiber according to an aspect of the present disclosure includes a glass fiber including a core and a cladding surrounding the core, a primary resin layer surrounding the glass fiber, and a secondary resin layer surrounding the primary resin layer, wherein in a case where a radius of the glass fiber is denoted by R0 [m], a Young's modulus of the glass fiber is denoted by E0 [N/m$^2$], a radius of the primary resin layer is denoted by R1 [m], a Young's modulus of the primary resin layer is denoted by E1 [N/m$^2$], a radius of the secondary resin layer is denoted by R2 [m], and a Young's modulus of the secondary resin layer is denoted by E2 [N/m$^2$], a relationship between a lateral rigidity D [N/m$^2$] of the optical fiber represented by Formula (1) and a flexural rigidity H [N·m$^2$] of the optical fiber represented by Formula (2) satisfies Formula (3), and a coating concentricity error is 8 $\mu$m or less,

[Equation 2]

$$D = \left\{ \frac{c1}{\left(1 - \frac{R0}{R2}\right)^{c2}} + c3 \right\} \left\{ (E2 - E1) 10^{\sum_{i,j,k} c_{ijk} \left(log_{10}\frac{R2-R1}{R2-R0}\right)^{i} \left(log_{10}\frac{E1}{E2}\right)^{j} \left(log_{10}\frac{R0}{R2}\right)^{k}} + E1 \right\} \dots (1)$$

$$H \propto \pi R0^4 E0 + \pi (R2^4 - R1^4) E2 \dots (2)$$

$$D/H^2 \ [N^{-1} \cdot m^{-6}] \leqq 6.6 \times 10^{18} \ [N^{-1} \cdot m^{-6}] \dots (3)$$

where, c1 = 0.209367, c2 = 1.206659, c3 = 0.401169, and $c_{ijk}$ is as follows
$c_{000} = -0.611554$,
$c_{100} = 3.615414$,
$c_{010} = 0.253128$,
$c_{001} = -7.130445$,
$c_{200} = 0.787599$,

$c_{110}$ = 0.329243,

$c_{101}$ = 2.320080,

$c_{020}$ = -0.062024,

$c_{011}$ = -0.985974, and

$c_{002}$ = -8.696048.

With this optical fiber, since the lateral rigidity D and the flexural rigidity H satisfy Formula (3), the microbend loss can be reliably reduced. In addition, since the coating concentricity error is low, the deviation between a calculated value and an actually measured value of the microbend loss is less likely increased. Therefore, the microbend loss can be more reliably reduced.

(2) In the above-described (1), a diameter of the glass fiber may be from 75 $\mu$m to 130 $\mu$m. Even though the glass fiber has a small diameter as described above, the microbend loss can be more reliably reduced.

(3) In the above-described (1), a diameter of the glass fiber may be from 75 $\mu$m to 120 $\mu$m. Even though the glass fiber has a small diameter as described above, the microbend loss can be more reliably reduced.

(4) In any one of the above-described (1) to (3), the Young's modulus of the primary resin layer is from 0.01 MPa to 0.8 MPa. In this case, since the Young's modulus of the primary resin layer is 0.8 MPa or less, the microbend loss can be reduced. Since the Young's modulus of the primary resin layer is 0.01 MPa or more, damage to the coating resin can be prevented.

(5) In any one of the above-described (1) to (4), a thickness of the secondary resin layer may be 5 $\mu$m or more. In this case, breakage of the optical fiber caused by foreign matter can be prevented.

[Details of Embodiment of Present Disclosure]

A specific example of an optical fiber according to the present embodiment will be described with reference to the drawings as necessary. Note that the present disclosure is not limited to these examples, but is indicated by the claims, and is intended to include all modifications within the meaning and scope equivalent to the claims. In the description of the drawings, the same elements are denoted by the same reference signs to avoid providing the redundant description.

FIG. 1 is a cross-sectional view perpendicular to the fiber axis of the optical fiber according to the embodiment. As illustrated in FIG. 1, an optical fiber 1 according to the embodiment includes a glass fiber 10 and a coating resin 20.

Glass fiber 10 is made of silica glass. Glass fiber 10 includes a core 11 and a cladding 12. Core 11 extends along the fiber axis of optical fiber 1. A diameter (core diameter) of core 11 is, for example, from 9 $\mu$m to 14 $\mu$m. A refractive index of core 11 is larger than a refractive index of cladding 12. A relative refractive index difference of core 11 to cladding 12 is, for example, from 0.3% to 0.5%. In the present embodiment, as the microbend loss is reduced, the relative refractive index difference of core 11 can be reduced. Core 11 is made of, for example, silica glass with germanium added or pure silica glass. Here, the pure silica glass is silica glass substantially containing no impurities.

Cladding 12 surrounds core 11 and covers an outer peripheral surface of core 11. Cladding 12 is made of pure silica glass or silica glass with fluorine added. A diameter (cladding diameter) of cladding 12 is a diameter (glass diameter) of glass fiber 10. The glass diameter is, for example, from 75 $\mu$m to 130 $\mu$m. The glass diameter may be from 75 $\mu$m to 120 $\mu$m. A Young's modulus of glass fiber 10 is, for example, from 70 GPa to 80 GPa. A trench may be provided in cladding 12. By employing the trench, the microbend loss can be further reliably reduced.

Coating resin 20 is made of an ultraviolet curable resin. Coating resin 20 includes a primary resin layer 21 and a secondary resin layer 22. Primary resin layer 21 surrounds glass fiber 10 (cladding 12) and covers an outer peripheral surface of glass fiber 10. Primary resin layer 21 is provided in contact with glass fiber 10. A diameter of primary resin layer 21 is, for example, from 0 $\mu$m to 210 $\mu$m. A thickness of primary resin layer 21 is, for example, from 0 $\mu$m to 65 $\mu$m.

A Young's modulus of primary resin layer 21 may be from 0.01 MPa to 0.8 MPa, or from 0.05 MPa to 0.7 MPa. In order to reduce the microbend loss, the Young's modulus of primary resin layer 21 is preferably as low as possible. In a case where the Young's modulus of primary resin layer 21 is more than 0.8 MPa, the microbend loss cannot be sufficiently reduced. In a case where the Young's modulus of primary resin layer 21 is too low, coating resin 20 may be damaged. In a case where the Young's modulus of primary resin layer 21 is 0.01 MPa or more, damage to coating resin 20 is prevented. In a case where the Young's modulus of primary resin layer 21 is 0.05 MPa or more, damage to coating resin 20 is further prevented.

Primary resin layer 21 contains, for example, polyether-based or polyester-based urethane acrylate. Primary resin layer 21 may contain a reactive diluent monomer and a photoinitiator as necessary. The Young's modulus of primary resin layer 21 is adjusted on the basis of, for example, a molecular weight of a polyether moiety of an ultraviolet curable resin and the type of a diluent monomer.

Primary resin layer 21 contains, for example, from 0.3% by mass to 2.0% by mass of a photoinitiator containing phosphorus. Primary resin layer 21 contains, for example, polypropylene glycol having a mass-average molecular weight of from 1,000 to 5,000. As a result, in optical fiber 1 including primary resin layer 21 with a relatively low Young's modulus, even though optical fiber 1 receives a force from the outside at the time of rewinding, unitization, or other processing, peeling of an interface between glass fiber 10 and primary resin layer 21 or destruction of the coating with the resin is less likely to occur.

Secondary resin layer 22 surrounds primary resin layer 21 and covers an outer peripheral surface of primary resin layer 21. A diameter of secondary resin layer 22 is, for example, from 110 µm to 210 µm. The diameter of secondary resin layer 22 is a diameter (coating diameter) of coating resin 20. A thickness of secondary resin layer 22 is, for example, 5 µm or more. A Young's modulus of secondary resin layer 22 is, for example, from 1,000 MPa to 3,000 MPa.

Secondary resin layer 22 contains, for example, polyether-based or polyester-based urethane acrylate. Secondary resin layer 22 may contain a reactive diluent monomer and a photoinitiator as necessary. The Young's modulus of secondary resin layer 22 is adjusted on the basis of, for example, a molecular weight of a polyether moiety of an ultraviolet curable resin and the type of a diluent monomer.

A coating concentricity error of optical fiber 1 is, for example, 8 µm or less. Here, the coating concentricity error is defined as a distance from the central axis with respect to the outer periphery of coating resin 20 (secondary resin layer 22) to the central axis of glass fiber 10. In the cross-section orthogonal to the fiber axis, the deviation between the center based on the outer periphery of coating resin 20 and the center of glass fiber 10 is the coating concentricity error. The coating concentricity error may be 6 µm or less. Since the coating concentricity error is likely to change in the longitudinal direction of optical fiber 1, it is desirable to measure the coating concentricity error at a plurality of points in the longitudinal direction of optical fiber 1. Preferably, an average of values measured at 500 or more points every 1 mm to 100 mm may be used as the coating concentricity error.

As described above, in a case where the approximation formula in Patent Literature 1 is applied to optical fibers with a glass diameter other than 125 µm, the deviation between the calculated value and the actually measured value of the microbend loss may increase. In particular, in the optical fiber having a small diameter, it has been found that the microbend loss according to the approximation formula in Patent Literature 1 is lower than that in practice. Therefore, the present inventors have derived an approximation formula expanded to a range in which the glass diameter is smaller than 125 µm or a range in which the coating diameter is smaller than 160 µm, and have specified optical fiber 1 capable of reliably reducing the microbend loss even in the case of a small diameter as follows.

That is, in a case where a radius of glass fiber 10 is R0 [m], the Young's modulus of glass fiber 10 is E0 [N/m$^2$], a radius of primary resin layer 21 is R1 [m], the Young's modulus of primary resin layer 21 is E1 [N/m$^2$], a radius of secondary resin layer 22 is R2 [m], and the Young's modulus of secondary resin layer 22 is E2 [N/m$^2$], a relationship between a lateral rigidity D [N/m$^2$] of optical fiber 1 represented by Formula (1) and a flexural rigidity H [N·m$^2$] of optical fiber 1 represented by Formula (2) satisfies Formula (3).

[Equation 3]

$$D = \left\{ \frac{c1}{\left(1 - \frac{R0}{R2}\right)^{c2}} + c3 \right\} \left\{ (E2 - E1)10^{\sum_{i,j,k} c_{ijk}\left(log_{10}\frac{R2-R1}{R2-R0}\right)^i \left(log_{10}\frac{E1}{E2}\right)^j \left(log_{10}\frac{R0}{R2}\right)^k} + E1 \right\} \dots (1)$$

$$H \propto \pi R0^4 E0 + \pi\left(R2^4 - R1^4\right)E2 \dots (2)$$

$$D/H^2 \; [\mathrm{N}^{-1} \cdot \mathrm{m}^{-6}] \leqq 6.6 \times 10^{18} \; [\mathrm{N}^{-1} \cdot \mathrm{m}^{-6}] \dots (3)$$

Here, c1 = 0.209367, c2 = 1.206659, c3 = 0.401169, and $c_{ijk}$ is as follows.

$c_{000}$ = -0.611554
$c_{100}$ = 3.615414
$c_{010}$ = 0.253128
$c_{001}$ = -7.130445
$c_{200}$ = 0.787599
$c_{110}$ = 0.329243
$c_{101}$ = 2.320080
$c_{020}$ = -0.062024
$c_{011}$ = -0.985974
$c_{002}$ = -8.696048

Formula (2) is a formula for the flexural rigidity H described in Non-Patent Literature 1. A method for deriving Formulas (1) and (3) will be described below.

In general, a microbend loss $\alpha$ of an optical fiber is represented by an approximation formula of Formula (4) with the lateral rigidity D, the flexural rigidity H, and a proportional constant A [$10^{-3} \cdot dB \cdot N \cdot m^5$] based on propagation characteristics of the optical fiber and other parameters.
[Equation 4]

$$\alpha \sim A \times \left(\frac{D}{H^2}\right) \dots (4)$$

The microbend loss $\alpha$ of the optical fiber having a small-diameter is 5.0 dB/km, and may be 3.0 dB/km or less or 1.0 dB/km or less. Therefore, the constant A of Formula (4) was calculated from the actually measured value of the microbend loss $\alpha$, and the results of obtaining $D/H^2$ satisfying the above value is illustrated in Table 1. From the results illustrated in Table 1, Formula (3) was obtained as a conditional formula of $D/H^2$ for reducing the microbend loss $\alpha$ to 5.0 dB/km or less.

[Table 1]

| $D/H^2$ [$N^{-1} \cdot m^{-6}$] | $6.6 \times 10^{18}$ | $3.9 \times 10^{18}$ | $1.3 \times 10^{18}$ |
|---|---|---|---|
| A [$10^{-3} \cdot dB \cdot N \cdot m^5$] | $7.6 \times 10^{-19}$ | $7.6 \times 10^{-19}$ | $7.6 \times 10^{-19}$ |
| $\alpha$ [dB/km] | 5 | 3 | 1 |

On the basis of the method in Non-Patent Literature 1, the two-dimensional FEM (finite element method) calculation was performed by using the analysis software MSC.Nastran 2020sp1 for 378 types of combinations in which the cladding diameter (2R0) is from 75 $\mu$m to 130 $\mu$m, the primary diameter (2R1) is from 0 $\mu$m to 210 $\mu$m, the secondary diameter (2R1) is from 110 $\mu$m to 210 $\mu$m, the Young's modulus E1 of the primary resin layer is from 0.05 MPa to 0.7 MPa, and the Young's modulus E2 of the secondary resin layer is from 1,000 MPa to 3,000 MPa.
Subsequently, each lateral rigidity D was calculated from the analysis results based on the following formula.

$$D = 2F\theta R2/uy^*$$

Here, F is a side pressure (1 MPa), $\theta$ is a stress application angle (from 0 degrees to 9 degrees), and $uy^*$ is a displacement amount of a pressurization part in each structure.
Furthermore, from the results of the lateral rigidity D obtained in each structure, the following analysis formula having R0, R1, R2, E0, E1, and E2 as explanatory variables was obtained. c1, c2, c3 and $c_{ijk}$ are as described above.
[Equation 5]

$$log_{10}\frac{D-D1}{D2-D1} \sim \sum_{i,j,k} c_{ijk} \left(log_{10}\frac{R2-R1}{R2-R0}\right)^i \left(log_{10}\frac{E1}{E2}\right)^j \left(log_{10}\frac{R0}{R2}\right)^k \dots (5)$$

where,
[Equation 6]

$$\frac{D1}{E1} = \frac{D2}{E2} = \frac{c1}{\left(1 - \frac{R0}{R2}\right)^{c2}} + c3 \dots (6)$$

Formula (1) was obtained by arranging Formulas (5) and (6). By using Formula (1), the lateral rigidity D can be calculated, and $D/H^2$ of Formula (3) is obtained.
As described above, since the lateral rigidity D and the flexural rigidity H of optical fiber 1 satisfy Formula (3), the microbend loss can be reliably reduced. As the coating concentricity increases, the deviation between the calculated value and the actually measured value of the microbend loss increases. In optical fiber 1, since the coating concentricity error is 8 $\mu$m or lower, the deviation between the calculated value and the actually measured value of the microbend loss is reduced. Therefore, the microbend loss can be more reliably reduced. When the coating concentricity error was 5 $\mu$m, the relative error between the calculated value and the actually measured value was 5.3%. When the coating concentricity error was 8 $\mu$m, the relative error between the calculated value and the actually measured value was 9.8%. When the coating concentricity error was 10 μm, the relative error between the calculated value and the actually measured value was 21.8%. Since the relative error is preferably 10% or less, the coating concentricity error is preferably 8 μm or less. In order to further reduce the relative error, the coating concentricity error is preferably as small as possible.

In order to reduce the microbend loss, the Young's modulus of primary resin layer 21 is preferably as low as possible. On the other hand, in a case where the Young's modulus of primary resin layer 21 is too low, coating resin 20 may be damaged. In optical fiber 1, since the Young's modulus of the primary resin layer is from 0.01 MPa to 0.8 MPa, it is possible to prevent damage to coating resin 20 while reducing the microbend loss.

Even though the lateral rigidity D and the flexural rigidity H satisfy Formula (3), optical fiber 1 may be broken due to foreign matter in a case where the thickness of secondary resin layer 22 is less than 5 μm. In optical fiber 1, since the thickness of secondary resin layer 22 is 5 μm or more, breakage of optical fiber 1 caused by foreign matter is prevented.

Although the embodiment and the variation have been described above, the present disclosure is not necessarily limited to the above-described embodiment and variation, and various modifications can be made without departing from the gist thereof. The above-described embodiment and variation may be appropriately combined.

The diameter of glass fiber 10 may be less than 60 μm, or may be more than 125 μm. In the present embodiment, since the lateral rigidity D is calculated based on the numerical analysis carried out in the range in which the cladding diameter (2R0) is from 75 μm to 130 μm, the microbend loss can be accurately approximated within this range, but the microbend loss can be approximated even in a case where the cladding diameter (2R0) exceeds this range. Similarly, the microbend loss can be accurately approximated as long as the primary diameter (2R1), the secondary diameter (2R1), the Young's modulus E1 of the primary resin layer, and the Young's modulus E2 of the secondary resin layer fall within the range specified by the numerical analysis, but can be approximated even though those exceed this range.

## Reference Signs List

1   Optical fiber
10   Glass fiber
11   Core
12   Cladding
20   Coating resin
21   Primary resin layer
22   Secondary resin layer

## Claims

1. An optical fiber comprising:

   a glass fiber including a core and a cladding surrounding the core;
   a primary resin layer surrounding the glass fiber; and
   a secondary resin layer surrounding the primary resin layer, wherein
   in a case where a radius of the glass fiber is denoted by R0 [m], a Young's modulus of the glass fiber is denoted by E0 [N/m$^2$], a radius of the primary resin layer is denoted by R1 [m], a Young's modulus of the primary resin layer is denoted by E1 [N/m$^2$], a radius of the secondary resin layer is denoted by R2 [m], and a Young's modulus of the secondary resin layer is denoted by E2 [N/m$^2$], a relationship between a lateral rigidity D [N/m$^2$] of the optical fiber represented by Formula (1) and a flexural rigidity H [N·m$^2$] of the optical fiber represented by Formula (2) satisfies Formula (3),

[Equation 1]

$$D = \left\{ \frac{c1}{\left(1 - \frac{R0}{R2}\right)^{c2}} + c3 \right\} \left\{ (E2 - E1) 10^{\sum_{i,j,k} c_{ijk} \left(log_{10}\frac{R2-R1}{R2-R0}\right)^i \left(log_{10}\frac{E1}{E2}\right)^j \left(log_{10}\frac{R0}{R2}\right)^k} + E1 \right\} \dots (1)$$

$$H \propto \pi R0^4 E0 + \pi\left(R2^4 - R1^4\right) E2 \dots (2)$$

$$D/H^2 \ [\mathrm{N}^{-1} \cdot \mathrm{m}^{-6}] \leqq 6.6 \times 10^{18} \ [\mathrm{N}^{-1} \cdot \mathrm{m}^{-6}] \dots (3)$$

where, c1 = 0.209367, c2 = 1.206659, c3 = 0.401169, and $c_{ijk}$ is as follows:

$c_{000}$ = -0.611554;
$c_{100}$ = 3.615414;
$c_{010}$ = 0.253128;
$c_{001}$ = -7.130445;
$c_{200}$ = 0.787599;
$c_{110}$ = 0.329243;
$c_{101}$ = 2.320080;
$c_{020}$ = -0.062024;
$c_{011}$ = -0.985974; and
$c_{002}$ = -8.696048, and
a coating concentricity error is 8 $\mu$m or less.

2. The optical fiber according to claim 1, wherein
a diameter of the glass fiber is from 75 $\mu$m to 130 $\mu$m.

3. The optical fiber according to claim 1, wherein
a diameter of the glass fiber is from 75 $\mu$m to 120 $\mu$m.

4. The optical fiber according to any one of claims 1 to 3, wherein
the Young's modulus of the primary resin layer is from 0.01 MPa to 0.8 MPa.

5. The optical fiber according to any one of claims 1 to 3, wherein
the Young's modulus of the primary resin layer is from 0.05 MPa to 0.7 MPa.

6. The optical fiber according to any one of claims 1 to 5, wherein
a thickness of the secondary resin layer is 5 $\mu$m or more.

7. The optical fiber according to any one of claims 1 to 6, wherein
the Young's modulus of the secondary resin layer is from 1,000 MPa to 3,000 MPa.

8. The optical fiber according to any one of claims 1 to 7, wherein
the coating concentricity error is 6 $\mu$m or less.

9. The optical fiber according to any one of claims 1 to 8, wherein
a microbend loss is 5.0 dB/km or less.

## Fig.1

## INTERNATIONAL SEARCH REPORT

| International application No. |
|---|
| **PCT/JP2024/005481** |

| A. | CLASSIFICATION OF SUBJECT MATTER |
|---|---|

*C03C 25/1065*(2018.01)i; *C03C 25/24*(2018.01)i; *G02B 6/44*(2006.01)i
FI:   C03C25/1065; C03C25/24; G02B6/44 331

According to International Patent Classification (IPC) or to both national classification and IPC

| B. | FIELDS SEARCHED |
|---|---|

Minimum documentation searched (classification system followed by classification symbols)

C03C25/00-25/70; G02B6/00-6/54

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580/JSTChina(JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2018/025896 A1 (SUMITOMO ELECTRIC INDUSTRIES, LTD.) 08 February 2018 (2018-02-08)<br>claims, paragraphs [0015]-[0051] | 1-9 |
| Y | WO 2021/187466 A1 (NITTO DENKO CORPORATION) 23 September 2021 (2021-09-23)<br>paragraphs [0053]-[0061] | 1-9 |
| Y | JP 2014-125405 A (FUJIKURA LTD.) 07 July 2014 (2014-07-07)<br>paragraph [0015] | 1-9 |
| A | JP 2019-112293 A (OFS FITEL LLC) 11 July 2019 (2019-07-11)<br>entire text | 1-9 |
| A | WO 2021/090912 A1 (FUJIKURA LTD.) 14 May 2021 (2021-05-14)<br>entire text | 1-9 |
| A | JP 2006-65006 A (FUJIKURA LTD.) 09 March 2006 (2006-03-09)<br>entire text | 1-9 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/005481** |

| Patent document cited in search report | | | Publication date (day/month/year) | Patent family member(s) | | | Publication date (day/month/year) |
| --- | --- | --- | --- | --- | --- | --- | --- |
| WO | 2018/025896 | A1 | 08 February 2018 | US<br>claims, paragraphs [0024]-[0070]<br>CN | 2019/0187366<br><br>109562989 | A1<br><br>A | |
| WO | 2021/187466 | A1 | 23 September 2021 | US<br>paragraphs [0057]-[0064]<br>CN<br>TW | 2023/0137341<br><br>115280210<br>202144831 | A1<br><br>A<br>A | |
| JP | 2014-125405 | A | 07 July 2014 | (Family: none) | | | |
| JP | 2019-112293 | A | 11 July 2019 | US<br>entire text<br>EP<br>CN | 2019/0146150<br><br>3486698<br>109799570 | A1<br><br>A1<br>A | |
| WO | 2021/090912 | A1 | 14 May 2021 | US<br>entire text<br>US<br>EP<br>CN | 2022/0011505<br><br>2022/0276432<br>3868728<br>113099726 | A1<br><br>A1<br>A1<br>A | |
| JP | 2006-65006 | A | 09 March 2006 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023022232 A

- WO 2018025896 A

**Non-patent literature cited in the description**

- **F. COCCHINI**. The Lateral Rigidity of Double-Coated Optical Fibers. *JOURNAL OF LIGHTWAVE TECH-NOLOGY*, August 1995, vol. 13 (8)